# EUROPÄISCHE PATENTSCHRIFT

(11) **EP 0 789 646 B1**
(45) Veröffentlichungstag und Bekanntmachung des Hinweises auf die Patenterteilung: **14.10.1998**
(21) Anmeldenummer: 95938382.9
(22) Anmeldetag: 31.10.1995
(51) Int. Cl.: B29C 41/42

(54) **VERFAHREN UND VORRICHTUNG ZUM ABSTREIFEN DÜNNWANDIGER, UNVERSTÄRKTER VULKANISIERTER TAUCHARTIKEL, INBESONDERE OPERATIONS- ODER UNTERSUCHUNGSHANDSCHUHE, VON EINER TAUCHFORM**
METHOD AND DEVICE FOR STRIPPING THIN-WALLED, NON-REINFORCED VULCANIZED DIPPED ARTICLES, IN PARTICULAR SURGICAL OR EXAMINATION GLOVES, FROM A DIPPING MOULD
PROCEDE ET DISPOSITIF PERMETTANT DE RETIRER DES ARTICLES IMMERGES VULCANISES, NON RENFORCES, A PAROIS MINCES, EN PARTICULIER DES GANTS DE CHIRURGIE OU D'EXAMEN, D'UN MOULE A IMMERSION

(30) Priorität: 02.11.1994 DE 4439136
(43) Veröffentlichungstag der Anmeldung: 20.08.1997
(73) Patentinhaber: A.I.I.C. Avenue International Industry Consultancy, 2521 AV 's-Gravenhage (NL)
(72) Erfinder: LEHMANN, Winfried, D-07937 Zeulenroda (DE); GOEBEL, Wolfgang, D-07907 Schleiz (DE); SCHMIDT, Gottfried, D-08529 Plauen (DE); FEIERABEND, Dietmar, D-07952 Pausa (DE); ZÖPHEL, Andreas, D-07950 Triebes (DE)
(74) Vertreter: Kruspig, Volkmar, Dipl.-Ing.
(86) Internationale Anmeldenummer: EP9504277
(87) Internationale Veröffentlichungsnummer: WO9614197

(56) Entgegenhaltungen:
- FR-A- 2 559 709
- FR-A- 2 577 163
- GB-A- 916 902
- GB-A- 1 487 191
- GB-A- 2 232 919
- US-A- 2 628 387

## Beschreibung

Die Erfindung betrifft ein Verfahren und eine Vorrichtung zum Abstreifen dünnwandiger, unverstärkter vulkanisierter Tauchartikel, insbesondere Operations- oder Untersuchungshandschuhe, von einer Tauchform.

Diskontinuierliche oder kontinuierliche Tauchanlagen zur Herstellung von Tauchartikeln bestehen aus einem Band- oder Kettenförderer, an welchem eine Vielzahl von Tauchformen eingehängt ist. Die Tauchformen durchlaufen ein oder mehrere Tauchbecken, in denen sich Bäder befinden, um ein Benetzen der Tauchform mit einem Oberflächenfilm, beispielsweise aus Latex, zu erreichen. Die Tauchformen mit der oberflächlichen Filmbeschichtung werden anschließend in einen Vulkanisierabschnitt überfuhrt. Im Ergebnis des Vulkanisierprozesses entstehen unterschiedliche elastische Artikel, die dann von den Tauchformen abzuziehen sind.

Mit kontinuierlichen Tauchanlagen ist an sich eine außerordentlich hohe Produktivität erreichbar, jedoch entsteht das Problem, daß die Tauchartikel, beispielsweise Operationshandschuhe, manuell von den Tauchformen abgenommen bzw. abgestreift werden müssen. Dieses Abstreifen ist insbesondere bei komplizierten Tauchformen, z. B. zur Herstellung von Tauchartikeln aus dünnem, tauchfähigem Material, z. B. Arbeitsschutzhandschuhen, Operations- oder Untersuchungshandschuhen, schwierig und erfordert einen erheblichen Zeitaufwand sowie Geschick des hierfür zuständigen Personals.

Zur Erhöhung der Produktivität kontinuierlicher Tauchanlagen wurde daher bereits vorgeschlagen, den dünnwandigen, hochelastischen polymeren Tauchartikel dadurch von der Tauchform abzuziehen, indem mittels eines speziellen Düsensystems zwischen Tauchartikel und Tauchform Wasser eingespritzt bzw. eingepreßt wird, wodurch sich der Tauchartikel von der Form ablöst.

Es ist jedoch nachteilig, daß in diesem Falle der Tauchartikel anschließend wieder getrocknet werden muß und daß ein gleichzeitiges Wenden, wie dies für Operationshandschuhe erforderlich ist, nicht realisiert werden kann. Der Oberbegriff des Anspruchs 1 basiert auf der GB-A-916 902. Es ist daher Aufgabe der Erfindung, ein Verfahren und eine Vorrichtung zum Abstreifen dünnwandiger, unverstärkter vulkanisierter Tauchartikel, insbesondere Operations- oder Untersuchungshandschuhe, von einer Tauchform anzugeben, das es gestattet, auch bei komplizierten, nicht rotationssymmetrischen Tauchformen bzw. Tauchartikeln mit hoher Produktivität und abgestimmt auf den Betrieb einer Tauchanlage in trockenem Zustand Tauchartikel abzuziehen und für die weitere Verarbeitung in optimaler Art und Weise bereitzustellen.

Die Lösung der Aufgabe der Erfindung erfolgt mit den Merkmalen der Patentansprüche 1 und 4, wobei die Unteransprüche mindestens zweckmäßige Ausgestaltungen und Weiterbildungen umfassen.

Der Grundgedanke der Erfindung besteht darin, die bekannte Vorrichtung zum Abstreifen dünnwandiger, unverstärkter vulkanisierter Tauchartikel von einer Tauchform so auszugestalten, daß die Tauchformen mit den entsprechenden Tauchartikeln zu einer Abstreifvorrichtung oder die Abstreifvorrichtung bzw. mehrere derartige Vorrichtungen zu der Tauchform hinbewegt werden, anschließend die Tauchform für den eigentlichen Abstreifvorgang lagefixiert wird und dann zunächst ein Teil des Tauchartikels, vorteilhafterweise am freien oberen Ende, mittels Vakuum definiert abgehoben oder abgelöst wird, so daß in dieses abgelöste freie Ende ein federnd gelagerter beweglicher Abziehkeil eindringen kann.

Der Abziehkeil liegt im wesentlichen an den Konturen der Tauchform nachgiebig an und wird zu dem dem Ablöseabschnitt gegenüberliegenden Ende der Tauchform bzw. des Tauchartikels hin bewegt.

Um ein gleichzeitiges Wenden des Tauchartikels zu erreichen, erfolgt die Bewegung des Abziehkeiles über das Ende der Tauchform hinaus, wobei unter Nutzung der elastischen Verformbarkeit des Tauchartikels und der Haftkräfte desselben an der Tauchform in Verbindung mit der Wirkung des Abziehkeils eine kombinierte Abzieh- und Wendebewegung erreicht wird.

Mittels des drehbeweglichen Keiles, der bei der Abziehbewegung den Konturen der Tauchform folgen kann, ist das Abziehen von Tauchartikeln von nicht rotationssymmetrischen Tauchformen, insbesondere Tauchformen zum Herstellen von Operationshandschuhen oder dgl., möglich.

Zur weiteren Erhöhung der Produktivität im Fertigungsprozeß wird erfindungsgemäß vorgeschlagen, eine Vielzahl gegebenenfalls gegenüberliegend und wechselseitig versetzt angeordneter Abstreifvorrichtungen vorzusehen, so daß eine produktivitätseinschränkende Änderung einer kontinuierlichen Verfahrensführung hin zu einem diskontinuierlichen Verfahren nicht erforderlich ist. Hierfür werden die mehreren Abstreifvorrichtungen über eine beispielsweise horizontale Verschiebemöglichkeit mit gleicher Bewegungsgeschwindigkeit und Richtung bezogen auf die Tauchformen über eine vorgegebene Strecke mitbewegt. Während dieser Mitbewegung erfolgt das Abstreifen und Wenden des Tauchartikels. Nach abgeschlossenem Abstreifen werden die Abstreifvorrichtungen zum Ausgangspunkt zurückbewegt, und der Vorgang kann von neuem beginnen.

Durch die Haftreibung einerseits zwischen der Tauchform und dem Tauchartikel und zwischen dem Tauchartikel und dem Abziehkeil andererseits sowie durch die vorgegebene längere Bewegungsstrecke des Abziehkeils erfolgt erfindungsgemäß das Abziehen unter gleichzeitigem Wenden des Tauchartikels.

Vorteilhafterweise besteht die Ablöseeinheit gemäß einer Ausführungsform der Erfindung aus zwei beabstandeten Vakuumsaugern. Diese Vakuumsauger werden über einen Führungsschlitten oder mittels eines Pneumatikzylinders hin zum Tauchartikel bzw. zur Tauchform dann geführt, wenn diese ihre entsprechende Lageposition erreicht haben. Das Vakuum wird aufgehoben, wenn sich der Abziehkeil im erwähnten Zwischenraum zwischen Tauchartikel und Tauchform befindet und der Bewegungsvorgang zum Abstreifen eingeleitet wird.

Die Erfindung soll nachstehend anhand von Ausführungsbeispielen sowie unter Zuhilfenahme von Figuren näher erläutert werden. Hierbei zeigen
- Fig. 1: mehrere an einem Kettenförderer befindliche Tauchformen zur Herstellung von z. B. Operationshandschuhen mit Darstellung des Abstreifens und Wendens;
- Fig. 2: eine Detaildarstellung des Querschnitts des oberen Teiles der Tauchform mit Führungsfläche und Anschlag zur Lagefixierung;
- Fig. 3: eine Draufsicht auf den oberen Teil einer Tauchform mit Vakuumsaugvorrichtung zum teilweisen Abheben des Tauchartikels von der Tauchform; und
- Fig. 4: eine seitliche Ansicht des oberen Teiles der Tauchform mit federnd gelagertem Abziehkeil und einem Teil des Führungsstabes unmittelbar vor dem Abheben des Tauchartikels und Eindringen des Keils in den Zwischenraum zwischen Tauchartikel und Tauchform.

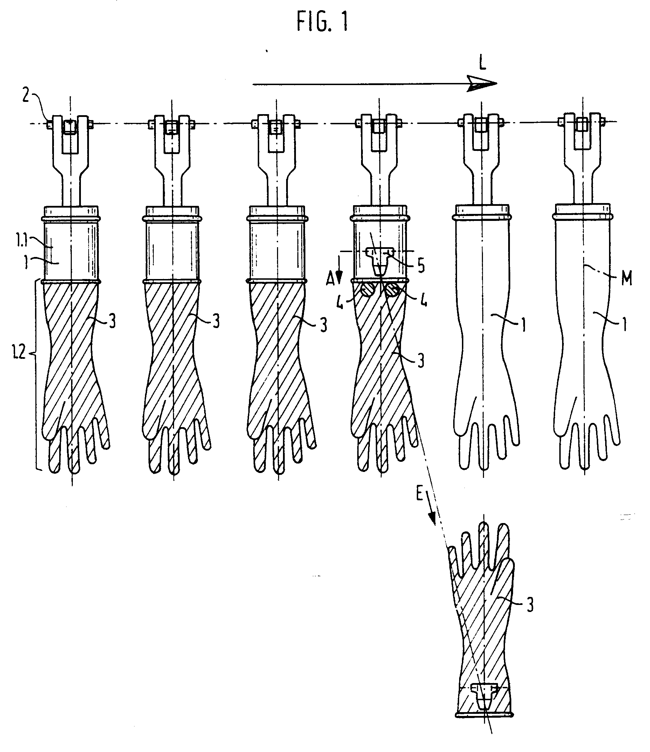

Mit Hilfe der Fig. 1 ist symbolisch eine Reihe von Tauchformen 1 dargestellt, die sich an einem Kettenförderer 2 oder ähnlichem befinden.

Die Tauchformen 1 durchlaufen unter anderem ein Latexbecken und anschließend eine Vulkanisierstrecke, so daß die oberflächliche Latex-Beschichtung vulkanisiert und im letzten Verfahrensschritt der so entstandene Tauchartikel 3 von der Tauchform 1 zu entfernen ist.

Die Laufrichtung der mit der Fig. 1 symbolisch dargestellten kontinuierlichen Tauchanlage ist mit dem Bezugszeichen L gekennzeichnet. Mit dem Bezugszeichen 4 ist eine Ablöseeinheit bzw. eine Vakuumsaugvorrichtung gekennzeichnet, und mit 5 ist der federnd gelagerte Abziehkeil bezeichnet.

Nachdem die Vakuumsaugvorrichtung 4 in Position hin zum Tauchartikel 3 gebracht wurde, erfolgt ein Ansaugen und Abheben des Tauchartikels 3 von der Oberfläche der Tauchform 1 dergestalt, daß der Abziehkeil 5 gemäß Fig. 1 von oben in den Zwischenraum eindringen kann. Bei einer Bewegung des Abziehkeils 5 in Pfeilrichtung A erfolgt eine Mitnahme des Materials des Tauchartikels 3, im gezeigten Beispiel Operationshandschuhe oder dgl. Vor dem Bewegen des Abziehkeils 5 in Pfeilrichtung A wird die Vakuumsaugvorrichtung 4 inaktiviert und in die ursprüngliche Position aus der Bildebene heraus positioniert.

Während der Bewegung des Abziehkeiles 5 in Pfeilrichtung A erfolgt ein Abstreifen und gleichzeitiges Wenden bzw. Umkrempeln des Tauchartikels 3, bedingt durch die Mitnahme mittels des Abziehkeils 5 einerseits und durch die Haftung an der Tauchform 1, die im gezeigten Beispiel eine Porzellanform ist, andererseits.

Im unteren Bildteil ist der Endzustand des von der Tauchform 1 entfernten und gewendeten Tauchartikels 3 dargestellt.

Die Bewegungen des Abziehkeiles 5 sowie der Vakuumsaugvorrichtung 4 und der Fördereinrichtung 2 zum Transport der Tauchartikel 1 sind derart aufeinander abgestimmt, daß eine kontinuierliche Prozeßführung nicht behindert wird.

In einer nicht gezeigten Ausführungsform der Erfindung sind mehrere Abziehkeile 5 sowie Vakuumsaugvorrichtungen 4 vorgesehen, um gleichzeitig eine Vielzahl von Tauchartikeln 3 abziehen und wenden zu können. Um eine kontinuierliche Bewegung der Fördereinrichtung der Tauchanlage nicht zu behindern, besteht die Möglichkeit, die Vakuumsaugvorrichtung 4 sowie den bzw. die Abziehkeile 5 in der gleichen Bewegungsrichtung und mit derselben Bewegungsgeschwindigkeit wie die Fördereinrichtung zu bewegen und anschließend nach vollständigem Abziehen und Wenden des betreffenden Tauchartikels wieder in die Ausgangsposition zurückzuführen. Zweckmäßigerweise wird die Abziehbewegung des oder der Abziehkeile 5 nach unten (Richtung A) in Bewegungsrichtung L schräg ausgeführt, so daß die Kontinuität beim Antrieb der Fördereinrichtung gewährleistet ist. Diese resultierende Bewegungsstrecke ist in Figur 1 mit E bezeichnet.

Beim gezeigten Ausführungsbeispiel ist die Tauchform 1 in ihrem oberen Bereich 1.1 nahezu rotationssymmetrisch und weist im unteren Bereich 1.2 eine komplizierte, vom rotationssymmetrischem abweichende Form bzw. Oberflächenkontur auf.

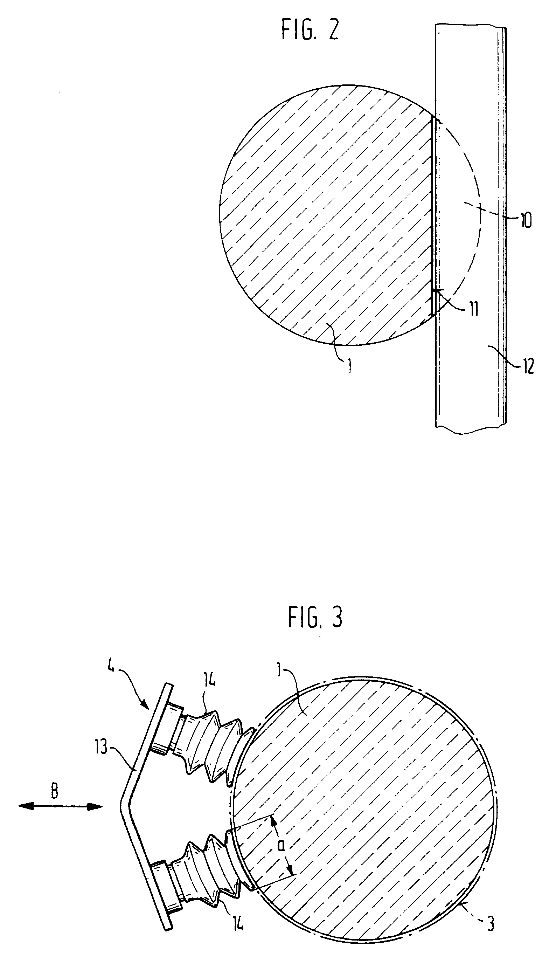

Die Fig. 2 zeigt die Draufsicht auf den oberen Bereich der Tauchform 1, wobei aus Übersichtlichkeitsgründen die Mitnahmearretierung für die Fördereinrichtung nicht dargestellt wurde.

Einseitig besitzt die Tauchform 1 eine Aussparung 10 mit einer Führungsfläche 11. In diese Führungsfläche 11 greift ein Profilstab 12 ein, welcher als Anschlag wirkt. Mit Hilfe dieses Anschlages ist eine Arretierung der Tauchform 1 mit darauf befindlichem Tauchartikel in der Abzieh- und Wendeposition möglich. Durch diese Anschlagwirkung werden ein unerwünschtes Zurückdrücken oder Verschieben mit nachfolgendem erschwertem Abziehen sowie möglicherweise auftretende Beschädigungen des Tauchartikels vermieden.

Mit Hilfe der Fig. 3 soll die Wirkung der Vakuumsaugvorrichtung 4 näher erläutert werden.

Die Vakuumsaugvorrichtung 4 befindet sich auf einer Halteplatte 13, welche aus einem um einen vorgegebenen Winkel abgekanteten Flachstück ausgebildet ist, so daß die Saugnäpfe 14 der Vakuumsaugvorrichtung möglichst tangential die Oberfläche des Tauchartikels 3, der sich auf der Tauchform 1, befindet, berühren. Die Halteplatte 13 mit darauf fixierten Saugnäpfen 14 ist in Pfeilrichtung B, d. h. senkrecht zur Mittelachse der Tauchform 1 hin- und herbewegbar, so daß ein Heranfahren der Vakuumsaugvorrichtung an die Tauchform 1 beim Erreichen der Abzieh- bzw. Abstreifposition derselben möglich wird.

In einer Ausführungsform bestehen die Saugnäpfe 14 aus Gummisaugern, welche über eine nicht dargestellte Leitung mit einer Vorrichtung zum Erzeugen eines Vakuums verbunden sind.

Die im oberen Bereich, d. h. am freien Ende des Tauchartikels 3 angeordneten Saugnäpfe 14 besitzen einen Durchmesser von a und sind mit einem Abstand von 2a zueinander angeordnet. Die Breite des Abziehkeiles 5 entspricht im wesentlichen der Größe a, so daß ein ungehindertes Eindringen in den Zwischenraum bei abgehobenem Tauchartikel 3 unter Wirkung der Vakuumsaugvorrichtung 4 möglich wird.

Durch das Zurückführen der Saugnäpfe 14 weg von der Tauchform 3 um einen Verfahrweg von im wesentlichen 3/4 a bei gleichzeitiger Vakuumeinwirkung wird die Schaftwandung des Tauchartikels, im gezeigten Beispiel von Operations- oder Untersuchungshandschuhen, durch die Dehnfähigkeit des Tauchartikelmaterials um das Maß 3/4 a von der Tauchform 1 abgehoben. An dieser Stelle bildet sich der erwähnte Zwischenraum des vorher dicht anliegenden Tauchartikels 3 aus. In diesen Zwischenraum wird dann der Abziehkeil 5 eingeführt und nach unten unter Mitnahme des Tauchartikels 3 bewegt.

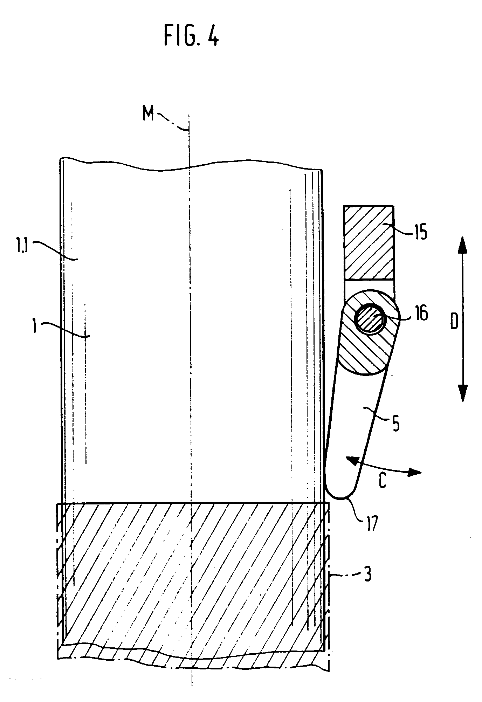

Mit Hilfe der Fig. 4 soll nun die beispielhafte Konstruktion des Abziehkeiles 5 näher erläutert werden. Die Fig. 4 zeigt den oberen Teil 1.1 der Tauchform 1 und einen oberen Abschnitt des Tauchartikels 3.

Der Abziehkeil 5 ist an einem unteren Ende eines Führungsstabes 15 mittels einer Achse 16 drehbeweglich und mit einer Torsionsfeder derart befestigt, daß der Abziehkeil 5 das Bestreben hat, an der Oberfläche der Tauchform 1 anzuliegen. Durch die federnde Lagerung des Abziehkeiles 5 kann dieser unterschiedlichen Oberflächenkonturen der Tauchform 1 folgen. In einer Ausführungsform der Erfindung ist der Abziehkeil 5 als beschichtetes Metallteil ausgeführt. Die Beschichtung ist bei diesem Beispiel insbesondere im Bereich 17 so ausgebildet, daß eine Beschädigung der Tauchform 1 sowie des abzuziehenden Tauchartikels 3 ausgeschlossen ist. Als Beschichtungsmaterial wurden Gummi, Silikongummi, Polyurethan, Polyethylen und dergleichen erfolgreich erprobt.

Der Abziehkeil 5 besitzt einen nicht gezeigten Anschlag zur Begrenzung der mit dem Pfeil C gezeigten Schwenkmöglichkeit.

Der Führungsstab 15 ist um einen vorgegebenen Abstand zur maximalen Durchmesserausdehnung der Tauchform 1 im wesentlichen parallel zur Mittelachse M der Tauchform 1 angeordnet. Der Führungsstab 15 mit daran befestigtem Abziehkeil 5 ist in Pfeilrichtung D auf- und abbewegbar. Die Neigung des Abziehkeiles 5 bezogen auf die Mittelachse M der Tauchform 1 beträgt bei einer bevorzugten Ausführungsform im wesentlichen 30° ± 5°. Der Abziehkeil 5 ist an seinem unteren Ende mit Abrundungen 17 versehen, um eine Beschädigung des Tauchartikels 3 beim Eindringen in den erwähnten Zwischenraum zu verhindern.

Nachdem die Vakuumsaugvorrichtung 4 gemäß Fig. 3 aktiv geworden ist und um den vorgegebenen Abstand zurückbewegt wurde, dringt der Keil 5 durch eine abwärtsgerichtete Bewegung in den entstandenen Zwischenraum unter Mitnahme des Tauchartikels 1 ein.

In einer bevorzugten Ausführungsform der Erfindung wird die Bewegung des Keiles 5 in Pfeilrichtung D nach unten über eine Strecke geführt, die größer als die maximale Längenausdehnung des abzuziehenden Tauchartikels 3 bzw. der Tauchform 1 ist. Vorzugsweise beträgt die Bewegungsstrecke des Abziehkeiles 5 das 1,2fache der Länge des abzuziehenden, nicht gedehnten Tauchartikels.

Gemäß einem weiteren Ausführungsbeispiel wirken mehrere Abziehkeile 5 in den sich ausbildenden Zwischenraum ein. Alternativ kann der mindestens eine Abziehkeil 5 aus mehreren Segmenten bzw. Abschnitten bestehen, die auf einer gemeinsamen, durchgehenden Achse 16 angeordnet sind. Die Achse 16 und/oder die Keilsegmente können dabei entsprechend dem Verlauf des Krümmungsradius der Tauchform 1 im oberen Bereich 1.1 gebogen sein.

Nachdem der Tauchartikel durch die Einwirkung einer Relativbewegung zwischen dem Abziehkeil und der Tauchform sowie durch die zu überwindende Haftreibung zwischen Tauchartikel und Tauchform abgezogen und gewendet wurde, ist dieser der Vorrichtung leicht entnehmbar und kann weiteren Verarbeitungsschritten bzw. der Verpackung zugeführt werden. Mit dem Einwirken der Vorrichtung zum Abziehen ist sichergestellt, daß Beschädigungen des Tauchartikels, wie beim manuellen Abziehen möglich, nahezu ausgeschlossen sind. Darüber hinaus ergibt sich eine erhebliche Produktivitätssteigerung, da das Abziehen bzw. Abstreifen und Wenden an den Taktrhythmus einer kontinuierlichen Tauchanlage angepaßt werden kann.

Der Führungsstab 15 kann mit einem Hydraulik- oder Pneumatikzylinder gekoppelt sein, um eine entsprechende gesteuerte Bewegung durchführen zu können. Gleichfalls kann die Halteplatte 13 über Hydraulik- oder Pneumatikzylinder geführt und bewegt werden. Entsprechend der Taktgeschwindigkeit bzw. der Bewegungsgeschwindigkeit der Förderanlage erfolgt unter Nutzung einer elektronischen Steuerung das Bewegen der Vakuumsaugvorrichtung 4 sowie des Abziehkeiles 5.

Im Unterschied zu bekannten Lösungen, wo bei rotationssymmetrischen Tauchformen ein einfaches Abrollen des Tauchartikels möglich ist, kann bei Tauchformen mit unregelmäßiger Oberflächenkontur auf ein Abrollverfahren nicht zurückgegriffen werden. Mit der Erfindung gelingt es jedoch, ohne eine Überdehnung und Beschädigung des Tauchartikels, diesen nicht nur von der Tauchform abzuziehen, sondern gleichzeitig, wie technologisch erforderlich, zu wenden. Durch die federnd gelagerte Ausbildung des Abziehkeiles ist ein ständiges Inkontaktbleiben mit der Tauchform auch bei sich verändernder Oberflächenkontur bei ausgeführter Abziehbewegung des Keiles möglich.

### Bezugszeichenliste

- 1: Tauchform
- 1.1: oberer Bereich der Tauchform
- 1.2: unterer Bereich der Tauchform
- 2: Kettenfördereinrichtung
- 3: Tauchartikel
- 4: Vakuumsaugvorrichtung
- 5: Abziehkeil
- 10: Aussparung
- 11: Führungsfläche
- 12: Profilstab bzw. Anschlag
- 13: Halteplatte
- 14: Saugnäpfe
- 15: Führungsstab
- 16: Achse
- 17: Abrundung
- A - E: Bewegungsrichtungen
- L: Laufrichtung
- M: Mittelachse der Tauchform

## Patentansprüche

1. Vorrichtung zum Abstreifen dünnwandiger, unverstärkter vulkanisierter Tauchartikel, insbesondere Operations- oder Untersuchungshandschuhe von einer Tauchform, mit mindestens einem Abziehkeil, der der Kontur der Form folgt, wobei
- der mindestens eine Abziehkeil (5) federnd gelagert und entlang der vorgesehenen Abstreifrichtung im wesentlichen parallel zur Längsausdehnung der Tauchform (1) und bei kontinuierlichen Tauchanlagen parallel zur Bewegungsrichtung (L) einer Fördereinrichtung (2) beweglich ist, wobei die zur Tauchform (1) parallele oder eine bei kontinuierlichen Tauchanlagen resultierende Bewegungsstrecke des Abziehkeiles (5) in vorgegebenem Maße größer als die maximale Länge des Tauchartikels (1) ist, dadurch gekennzeichnet,
daß eine Ablöseeinheit vorgesehen ist, welche den Tauchartikel am oberen, nicht geschlossenen freien Ende von der Tauchform (1) mittels Vakuumsaugvorgang zeitweise derart abhebt bzw. ablöst, daß der mindestens eine Abziehkeil (5) in diesen Bereich eindringen kann und unter Mitnahme des Tauchartikels (3) den Konturen der Tauchform (1) folgend bewegbar ist, so daß der Tauchartikel (3) beim Entfernen von der Tauchform (1) gleichzeitig gewendet ist.

2. Vorrichtung nach Anspruch 1,
dadurch gekennzeichnet,
daß der Abziehkeil (5) mittels einer an einem Ende eines Führungsstabes (15) angeordneten Achse (16) drehbeweglich zur Tauchform (1) hin federnd und anliegend gelagert ist, wobei die parallele Bewegung des Abziehkeiles (5) durch Bewegung des Führungsstabes (15) unter Mitnahme des Abziehkeiles (5) erfolgt, und wobei der Führungsstab (15) vom größten Durchmesser der Tauchform (1) in einem vorgegebenen Abstand entfernt und zur Mittelachse (M) der Tauchform (1) parallel angeordnet ist, weiterhin der Abziehkeil (5) mindestens im Bereich des Eindringens in den Tauchartikel (3) zur Mittelachse (M) der Tauchform (1) hin eine Neigung von im wesentlichen 30° ± 5° und einen die Winkelbewegung zur Tauchform (1) begrenzenden Anschlag aufweist.

3. Vorrichtung nach Anspruch 1 oder 2,
dadurch gekennzeichnet,
daß die parallele oder resultierende Bewegungsstrecke des Abziehkeiles (5) im wesentlichen dem 1,2fachen der maximalen ungedehnten Länge des Tauchartikels (3) bzw. dem für den Tauchartikel (3) maßgeblichen relevanten Teil der Tauchform (1) entspricht.

4. Vorrichtung nach Anspruch 1, 2 oder 3,
dadurch gekennzeichnet,
daß der Abziehkeil (5) mindestens an seiner in den Tauchartikel (3) eindringenden Seite eine Beschichtung mit abgerundeter Formgebung (17) zur Vermeidung von Beschädigungen des Tauchartikels (3) und der Tauchform (1) aufweist.

5. Vorrichtung nach Anspruch 1,
dadurch gekennzeichnet,
daß die Ablöseeinheit aus zwei beabstandeten, senkrecht zur Mittelachse (M) der Tauchform hin beweglichen Vakuumsaugern (4; 14) besteht.

6. Vorrichtung nach Anspruch 5,
dadurch gekennzeichnet,
daß die Vakuumsauger (4; 14) jeweils einen Durchmesser von a und einen Abstand von im wesentlichen 2a aufweisen, wobei nach dem Ansaugen des Tauchartikels (3) die Vakuumsauger mit einem Verfahrweg von im wesentlichen 3/4a von der Tauchform (1) weg, d. h. zurückbewegt werden, wodurch sich der Tauchartikel (3), bedingt durch seine Dehnbarkeit, von der Tauchform (1) zum Eindringen des Abziehkeils (5) abhebt.

7. Vorrichtung nach Anspruch 6,
dadurch gekennzeichnet,
daß die Breite des Abziehkeiles im wesentlichen dem Maß a entspricht.

8. Vorrichtung nach Anspruch 5 oder 6,
dadurch gekennzeichnet,
daß die Saugnäpfe (14) der Vakuumsaugvorrichtung (4) mittels einer Kalteplatte (13) derart befestigt sind, daß sich die verlängerten Längsachsen der Saugnäpfe (14) in einem Punkt auf der Mittelachse (M) der Tauchform (1) schneiden.

9. Vorrichtung nach Anspruch 1,
dadurch gekennzeichnet,
daß die Tauchform (1) eine unregelmäßige Oberflächenkontur aufweist.

10. Vorrichtung nach Anspruch 1,
dadurch gekennzeichnet,
daß die Tauchform (1) an ihrem oberen, nicht vom Tauchartikel (3) umfaßten Bereich eine Führungsfläche (11) aufweist, die mit einem Anschlag (12) zur Lagefixierung der Tauchform (1) während des Abstreif- und Wendevorganges zusammenwirkt.

## Claims

1. Device for stripping off thin-walled, non-reinforced vulcanised dipped articles, particularly surgical or research gloves, from a dipping mould, with at least one stripping wedge, which follows the contour of the mould,
- the at least one stripping wedge (5) being resiliently mounted and being movable along the provided stripping direction substantially parallel to the longitudinal extension of the dipping mould (1) and, in the case of continuous dipping plants, parallel to the direction of movement (L) of a conveyor device (2), the resultant path of movement of the stripping wedge (5) parallel to the dipping mould (1) or in continuous dipping plants, being to a certain extent greater than the maximum length of the dipped article (1),
characterised in that a release unit is provided, which at intervals raises or releases the dipped article at the upper, unclosed, free end from the dipping mould (1) by means of a vacuum suction procedure, in such a way that the at least one stripping wedge (5) can penetrate into this area, and, carrying along the dipped article (3), is movable to follow the contours of the dipping mould (1), so that the dipped article (3), during its removal from the dipping mould (1), is simultaneously turned.

2. Device according to claim 1,
characterised in that
the stripping wedge (5) is mounted to be rotarily movable towards the dipping mould (1) resiliently and in a contacting manner, by means of an axis (16) located at one end of a guide rod (15), the parallel movement of the stripping wedge (5) being effected by movement of the guide rod (15), carrying along the stripping wedge (5), and the guide rod (15) being removed from the largest diameter of the dipping mould (1) by a predetermined spacing and being located parallel to the central axis (M) of the dipping mould (1), the stripping wedge (5) further having, in the area of penetration into the dipped article (3), towards the central axis (M) of the dipping mould (1), an inclination of substantially 30° ± 5° and a stop means limiting the angular movement towards the dipping mould (1).

3. Device according to claim 1 or 2,
characterised in that
the parallel or resultant path of movement of the stripping wedge (5) corresponds substantially to 1.2 times the maximum non-extended length of the dipped article (3) or to the relevant portion of the dipping mould (1) which is determining for the dipped article (3).

4. Device according to claim 1,2 or 3,
characterised in that
the stripping wedge (5) has, at least on its side penetrating into the dipped article (3), a coating with a rounded shaping (17) in order to avoid damage to the dipped article (3) and to the dipping mould (1).

5. Device according to claim 1,
characterised in that
the release unit consists of two spaced-apart vacuum suction devices (4;14) movable vertically towards the central axis (M) of the dipping mould.

6. Device according to claim 5,
characterised in that
the vacuum suction devices (4;14) respectively have a diameter a and a spacing of substantially 2a, the vacuum suction means after suction of the dipped article (3) being moved back over a path of travel of substantially 3/4a away from the dipping mould (1), so that the dipped article (3), due to its expansion capacity, is lifted from the dipping mould (1) for penetration of the stripping wedge (5).

7. Device according to claim 6,
characterised in that
the width of the stripping wedge corresponds substantially to the measurement a.

8. Device according to claim 5 or 6,
characterised in that
the suction nozzles (14) of the vacuum suction device (4) are secured by means of a retaining plate (13) in such a way that the elongated longitudinal axis of the suction nozzles (14) intersect at a point on the central axis (M) of the dipping mould (1).

9. Device according to claim 1,
characterised in that
the dipping mould (1) has an irregular surface contour.

10. Device according to claim 1,
characterised in that
the dipping mould (1) has on its upper area not surrounded by the dipped article (3) a guide surface (11), which cooperates with a stop means (12) for fixing the position of the dipping mould (1) during the stripping and turning procedure.

## Revendications

1. Dispositif de démoulage, hors d'un moule de trempage, d'articles vulcanisés réalisés par trempage, à paroi mince et non renforcés, en particulier de gants d'opération ou d'examen, comprenant au moins un coin de démoulage qui suit le contour du moule, ledit au moins un coin (5) est monté élastiquement et est mobile le long de la direction de démoulage prévue, sensiblement parallèlement à l'extension longitudinale du moule de trempage (1) et, dans le cas de systèmes à trempage continu, parallèlement à la direction de déplacement (L) d'un dispositif de convoyage (2), le trajet de déplacement du coin de démoulage (5), qui est parallèle au moule de trempage (1) ou qui résulte d'un système de trempage continu, étant dans une mesure prédéterminée supérieur à la longueur maximum de l'article réalisé par trempage (1), caractérisé en ce qu'il est prévu une unité de détachement qui soulève et détache, respectivement, l'article réalisé par trempage a l'extrémité supérieure du moule de trempage (1) au moyen d'une opération d'aspiration sous vide, de telle sorte que ledit au moins un coin de démoulage (5) peut pénétrer dans cette région et est déplaçable en entraînant l'article réalisé par trempage (3) et en suivant les contours du moule de trempage, de sorte que lorsqu'on enlève le moule de trempage (1), l'article réalisé par trempage peut en même temps être retourné.

2. Dispositif selon la revendication 1, caractérisé en ce que le coin de démoulage (5) est monté mobile en rotation par rapport au moule de trempage (1) de manière élastique et en contact, au moyen d'un axe (16) agencé à une extrémité d'une barre de guidage (15), le mouvement parallèle du coin de démoulage (5) se produisant grâce au mouvement de la barre de guidage (15) en entraînant le coin de démoulage (5), et la barre de guidage (15) étant agencée à un écartement prédéterminé du plus grand diamètre du moule de trempage (1) et parallèle à l'axe médian (M) du moule de trempage (1), en ce que le coin de démoulage (5) présente en outre au moins dans la région de pénétration dans l'article réalisé par trempage (3) une inclinaison de sensiblement 30° ± 5° par rapport l'axe médian (M) du moule de trempage (1), et une butée limitant le mouvement angulaire par rapport au moule de trempage (1).

3. Dispositif selon l'une ou l'autre des revendication 1 et 2, caractérisé en ce que le trajet de déplacement parallèle ou résultant du coin de démoulage (5) correspond sensiblement à 1,2 fois la longueur maximum de l'article réalisé par trempage (3) non étiré et de la partie du moule de trempage (1) qui est déterminante pour l'article réalisé par trempage (3).

4. Dispositif selon la revendication 1, 2 ou 3, caractérisé en ce que le coin de démoulage (5) présente au moins sur son côté pénétrant dans l'article réalisé par trempage (3) un revêtement (17) à configuration arrondie pour éviter des endommagements de l'article réalisé par trempage (3) et du moule de trempage (1).

5. Dispositif selon la revendication 1, caractérisé en ce que l'unité de détachement est constituée par deux ventouses (4 ; 14) écartées, mobiles perpendiculairement par rapport à l'axe médian (M) du moule de trempage.

6. Dispositif selon la revendication 5, caractérisé en ce que les ventouses (4 ; 14) présentent chacune un diamètre a et un écartement de sensiblement 2a, et après avoir aspiré l'article réalisé par trempage (3), les ventouses sont retirées, c'est-à-dire ramenées avec une course de sensiblement 3/4a du moule de trempage (1), grâce à quoi, l'article réalisé par trempage (3), en raison de son expansibilité, se soulève du moule de trempage (1) pour la pénétration du coin de démoulage (5).

7. Dispositif selon la revendication 6, caractérisé en ce que la largeur du coin de démoulage correspond sensiblement à la valeur a.

8. Dispositif selon l'une ou l'autre des revendication 5 et 6, caractérisé en ce que les ventouses (14) du dispositif d'aspiration sous vide (4) sont fixées au moyen d'une plaque de retenue (13) de telle manière que les prolongations des axes longitudinaux des ventouses (14) se recoupent en un point sur l'axe médian (M) du moule de trempage (1).

9. Dispositif selon la revendication 1, caractérisé en ce que le moule de trempage (1) présente un contour de surface irrégulier.

10. Dispositif selon la revendication 1, caractérisé en ce que le moule de trempage (1) présente, dans sa région supérieure qui n'est pas entourée par l'article réalisé par trempage (1), une surface de guidage (11) qui coopère avec une butée (12) pour fixer la position du moule de trempage (1) pendant l'opération de démoulage et de retournement.
